# FASCICULE DE BREVET EUROPEEN

(11) **EP 1 766 202 B1**
(45) Date de publication et mention de la délivrance du brevet: **10.10.2007**
(21) Numéro de dépôt: 05778226.0
(22) Date de dépôt: 20.06.2005
(51) Int. Cl.: F01N 3/021, F02D 41/02, F02D 41/40, F01N 9/00, F01N 3/023, B01D 53/04

(54) **SYSTEME D'AIDE A LA REGENERATION DE MOYENS DE DEPOLLUTION ASSOCIES A DES MOYENS FORMANT CATALYSEUR**
SYSTEM ZUR UNTERSTÜTZUNG DER REGENERIERUNG VON ENTGIFTUNGSMITTELN IN VERBINDUNG MIT KATALYSATORBILDENDEN MITTELN.
SYSTEM FOR ASSISTING REGENERATION OF POLLUTION MANAGEMENT MEANS ASSOCIATED WITH CATALYST FORMING MEANS

(30) Priorité: 23.06.2004 FR 0406858
(43) Date de publication de la demande: 28.03.2007
(73) Titulaire: PEUGEOT CITROËN AUTOMOBILES S.A., 78140 Velizy Villacoublay (FR)
(72) Inventeur: COLIGNON, Christophe, F-92300 LEVALLOIS PERRET (FR)
(74) Mandataire: Pinchon, Odile
(86) Numéro de dépôt international: PCT/FR2005/050464
(87) Numéro de publication internationale: WO 2006/005867

(56) Documents cités:
- EP-A- 1 130 230
- EP-A- 1 281 852
- US-A- 5 207 990
- US-A1- 2004 016 227

## Description

La présente invention concerne un système d'aide à la régénération de moyens de dépollution intégrés dans une ligne d'échappement d'un moteur Diesel de véhicule automobile.

Plus particulièrement, l'invention se rapporte à un tel système dans lequel le moteur est associé à des moyens à rampe commune d'alimentation en carburant de cylindres de celui-ci, selon au moins une post-injection.

Une telle post-injection est, de façon classique, une injection de carburant après le point mort haut du cylindre considéré.

Ces moyens d'alimentation sont adaptés pour mettre en oeuvre, à Iso-couple, par modification de paramètres de contrôle de fonctionnement du moteur, différentes stratégies de régénération permettant d'obtenir des niveaux thermiques différents dans la ligne d'échappement.

Ainsi par exemple, des moyens d'alimentation mettant en oeuvre une première stratégie de régénération selon une stratégie dite de niveau 1 et une seconde stratégie de régénération selon une stratégie dite de niveau 2 et/ou une stratégie de niveau 2 surcalibré, ont déjà été proposés.

On sait en effet que pour assurer la régénération de moyens de dépollution tels qu'un filtre à particules, les suies piégées dans celui-ci sont brûlées grâce à la thermique fournie par le moteur et à l'exotherme réalisé par la conversion des HC et du CO sur des moyens formant catalyseur d'oxydation placés par exemple en amont du filtre à particules.

Cette combustion peut être assistée par un élément catalyseur mélangé aux suies, issu par exemple d'un additif d'aide à la régénération, mélangé au carburant d'alimentation du moteur ou bien par un catalyseur déposé directement sur les parois du filtre à particules (filtre à particules catalysé).

Cet état de la technique est illustré par example par la demande de brevet EP 1 281 852 A.

Plus les niveaux thermiques dans la ligne d'échappement en entrée du filtre à particules sont élevés, plus la durée de régénération du filtre est courte.

Or, en conditions de roulages critiques, comme par exemple en ville ou dans des embouteillages, les niveaux atteints à travers les stratégies d'aide à la régénération classiques du filtre à particules, peuvent se révéler insuffisants pour assurer la régénération correcte du filtre, ce qui peut se traduire par des régénérations très longues et donc très consommatrices de carburant, voire incomplètes.

Toute stratégie d'élévation de niveaux thermiques lors de ces roulages critiques permet alors d'assurer des régénérations complètes, de réduire la surconsommation due à cette régénération du filtre à particules, et surtout d'augmenter la marge de sécurité par rapport à la fissuration ou à la casse de ces filtres.

Le but de l'invention est de proposer une telle stratégie.

A cet effet, l'invention a pour objet un système d'aide à la régénération de moyens de dépollution associés à des moyens formant catalyseur d'oxydation et intégrés dans une ligne d'échappement d'un moteur Diesel de véhicule automobile, dans lequel le moteur est associé à des moyens à rampe commune d'alimentation en carburant des cylindres du moteur, adaptés, par modification de paramètres de contrôle du fonctionnement du moteur et en mettant en oeuvre des post-injections de carburant dans les cylindres de celui-ci, pour faire basculer le moteur entre quatre stratégies de régénération des moyens de dépollution, la première dite stratégie de fonctionnement normal du moteur, la deuxième dite stratégie de niveau 1, la troisième dite stratégie de niveau 2 et la quatrième dite stratégie de niveau 2 surcalibré, permettant d'obtenir des niveaux thermiques différents dans la ligne d'échappement, le niveau thermique obtenu par application de la stratégie de niveau 2 surcalibré étant supérieur à celui obtenu par application de la stratégie de niveau 2, qui est lui-même supérieur à celui obtenu par application de la stratégie de niveau 1, qui est lui-même supérieur à celui obtenu par application de la stratégie normale, les moyens d'alimentation étant raccordés à des moyens de détection d'une requête de régénération des moyens de dépollution pour piloter les moyens d'alimentation afin d'enclencher un fonctionnement du moteur selon la stratégie de niveau 1 à la detection de cette requête, et des moyens de surveillance caractérisé en ce que les moyens d'alimentation sont raccordés à de l'état d'amorcage des moyens formant catalyseur pour enclencher la stratégie de niveau 2 surcalibré dès que lesdits moyens formant catalyseur d'oxydation (2) sont activés à des moyens d'acquisition du niveau thermique dans la ligne d'échappement pour enclencher la stratégie de niveau 2 du moteur lorsque ce niveau thermique dépasse une température d'objectif prédéterminée, pendant une première période de temps prédéterminée ou pour couper la régénération si cette température n'a pas été atteinte avant l'expiration d'une seconde période de temps maximale prédéterminée, caractérisé en ce que les moyens d'alimentation sont raccordés à des moyens de surveillance du fonctionnement en niveau 2 du moteur pour piloter un fonctionnement du moteur en niveau 2 surcalibré si le niveau thermique dans la ligne d'échappement descend en dessous d'un seuil de température basse prédéterminée pendant une troisième période de temps, ou en niveau 1 si le niveau thermique dans la ligne d'échappement passe au-dessus d'un seuil de température haute prédéterminée pendant une quatrième période de temps, maintenir ce fonctionnement du moteur selon cette stratégie de niveau 1 pendant une cinquième période de temps de forçage prédéterminé ou jusqu'au moment où le niveau thermique dans la ligne d'échappement est redescendu en-dessous du seuil de température haute moins un écart d'hystérésis pendant une sixième période de temps, piloter un fonctionnement du moteur selon la stratégie normale dans le cas où le niveau thermique dans la ligne d'échappement n'est pas redescendu en-dessous du seuil de température haute moins l'écart d'hystérésis au bout d'une septième période de temps maximale de refroidissement jusqu'à ce que le niveau thermique dans la ligne d'échappement soit redescendu sous ce seuil de température haute moins l'écart d'hystérésis pendant la sixième période de temps et ce, avec rebouclage des stratégies, jusqu'à la détection d'une requête d'arrêt de la régénération par les moyens de détection.

Suivant d'autres caractéristiques:
- les températures d'objectif, haute et basse sont calibrables ;
- les périodes de temps sont calibrables ;
- les valeurs d'hystérésis sont calibrables ;
- il comporte des moyens d'émission de la requête de régénération et d'arrêt de celle-ci ;
- les moyens de surveillance de l'état d'amorçage des moyens formant catalyseur et d'acquisition de niveau thermique dans la ligne d'échappement, comprennent des capteurs de température ;
- les moyens de dépollution comprennent un filtre à particules ;
- le filtre à particules est catalysé ;
- les moyens de dépollution comprennent un piège à NOx;
- le carburant comporte un additif destiné à se déposer avec des particules auxquelles il est mélangé, sur les moyens de dépollution pour faciliter leur régénération ;
- le carburant comporte un additif formant piège à NOx ;
- les moyens de dépollution sont imprégnés avec une formulation SCR assurant une fonction d'oxydation CO/HC ; et
- le moteur est associé à un turbocompresseur.

L'invention sera mieux comprise à la lecture de la description qui va suivre, donnée uniquement à titre d'exemple et faite en se référant aux dessins annexés, sur lesquels :
- la Fig.1 représente un schéma synoptique illustrant la structure d'un système d'aide selon l'invention ; et
- la Fig.2 représente un organigramme illustrant le fonctionnement de celui-ci.

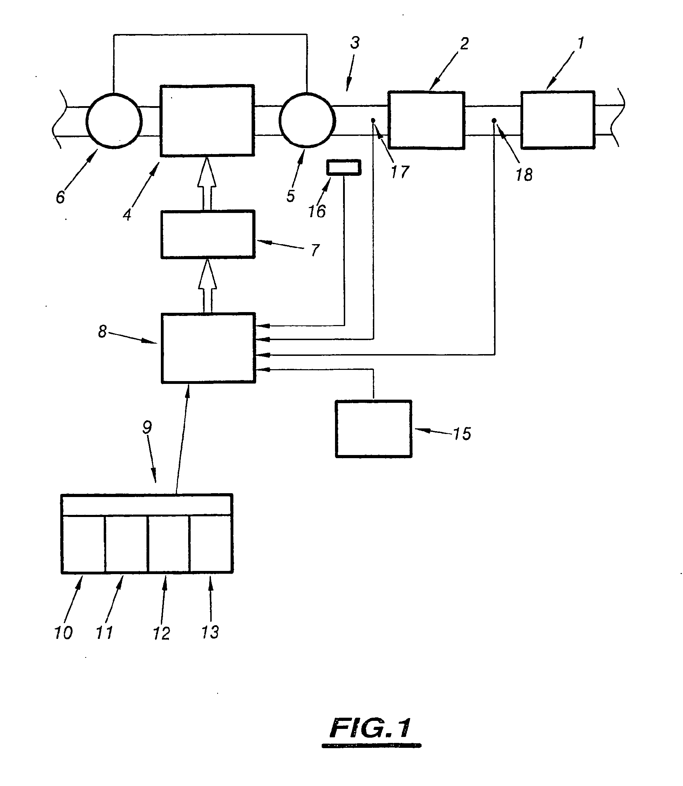

On a en effet illustré sur la figure 1, un système d'aide à la régénération de moyens de dépollution désignés par la référence générale 1, associés à des moyens formant catalyseur d'oxydation, désignés par la référence générale 2 et placés dans une ligne d'échappement 3 d'un moteur thermique tel qu'un moteur Diesel de véhicule automobile.

Ce moteur est désigné par la référence générale 4 et peut être associé par exemple à un turbocompresseur dont la portion de turbine 5 est associée à la ligne d'échappement et dont la portion de compresseur 6 est placée en amont du moteur.

Le moteur est associé à des moyens à rampe commune d'alimentation en carburant des cylindres de celui-ci, désignés par la référence générale 7, dont le fonctionnement est contrôlé par un superviseur 8.

Ces moyens sont alors adaptés pour contrôler le fonctionnement du moteur et en particulier, par modification de paramètres de contrôle du fonctionnement de ce moteur, pour faire basculer celui-ci entre quatre stratégies de régénération des moyens de dépollution, désignées par la référence générale 9 sur cette figure, une première dite stratégie normale de fonctionnement du moteur, 10, une deuxième dite stratégie de niveau 1,11, une troisième dite stratégie de niveau 2, 12, et une quatrième dite stratégie de niveau 2 surcalibré, 13, permettant d'obtenir des niveaux thermiques différents dans la ligne d'échappement.

C'est ainsi que le niveau thermique obtenu par application de la quatrième stratégie de niveau 2 surcalibré est supérieur à celui obtenu par application de la troisième stratégie de niveau 2 qui est lui-même supérieur à celui obtenu par application de la deuxième stratégie de niveau 1 qui est lui-même supérieur à celui obtenu par application de la première stratégie dite normale.

Le superviseur 8 est également relié à des moyens d'émission d'une requête de régénération des moyens de dépollution ou d'arrêt de celle-ci, désignés par la référence générale 15 sur cette figure 1 et à différents capteurs de température, par exemple 16, 17 et 18, répartis dans la ligne d'échappement pour acquérir des niveaux thermiques dans celle-ci, comme cela sera décrit plus en détail par la suite.

Le capteur de température 16 est adapté pour acquérir par exemple le niveau thermique dans la ligne d'échappement, tandis que les capteurs 17 et 18, placés de part et d'autre des moyens formant catalyseur, permettent de déterminer par exemple l'état d'amorçage de ceux-ci, de façon classique.

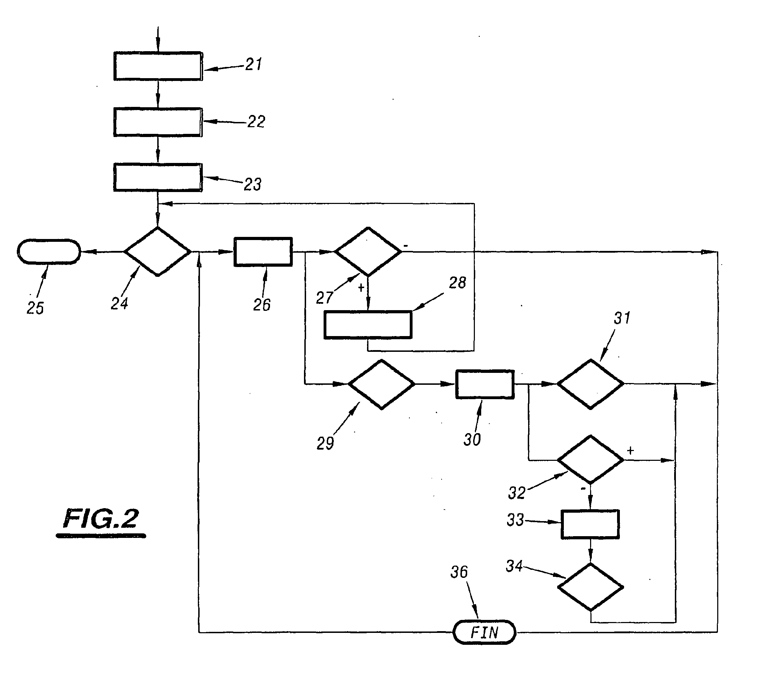

Le fonctionnement de ce système est illustré sur la figure 2 et débute par la réception par le superviseur 8 d'une requête de régénération des moyens de dépollution.

A la détection de cette requête de régénération, les moyens d'alimentation 7, 8 sont alors adaptés pour enclencher un fonctionnement du moteur selon la deuxième stratégie de niveau 1, en 21.

Ces moyens assurent alors une surveillance de l'état d'amorçage des moyens formant catalyseur en 22, pour enclencher dès que les moyens formant catalyseur sont activés, la quatrième stratégie de niveau 2 surcalibré en 23.

Le niveau thermique dans la ligne d'échappement est alors acquis et analysé pour enclencher la stratégie de niveau 2 du moteur lorsque ce niveau thermique dépasse une température d'objectif prédéterminée pendant une première période de temps prédéterminée ou pour couper la régénération si cette température n'a pas été atteinte avant l'expiration d'une seconde période de temps maximale prédéterminée.

Ces différents tests sont désignés par la référence générale 24 sur cette figure, la fin de la régénération étant désignée par la référence générale 25, tandis que l'enclenchement de la stratégie de niveau 2, est désigné par la référence générale 26.

Le fonctionnement du moteur en niveau 2 est alors surveillé pour déclencher un fonctionnement de ce moteur en niveau 2 surcalibré si le niveau thermique dans la ligne d'échappement descend en dessous d'un seuil de température basse prédéterminée pendant une troisième période de temps et ce, avec rebouclage des stratégies, jusqu'à la détection d'une requête d'arrêt de régénération par les moyens de détection.

Ces différents tests sont désignés par la référence générale 27 sur cette figure, qui, tant que le niveau thermique dans la ligne d'échappement n'est pas redescendu en-dessous de la température basse prédéterminée, se reboucle au niveau de l'étape 26 de stratégie de niveau 2 et dans le cas où le niveau thermique dans la ligne d'échappement descend en-dessous de la température basse prédéterminée, bascule le moteur sur un fonctionnement en niveau 2 surcalibré en 28, qui se reboucle sur l'étape de test 24 décrite précédemment.

Par ailleurs le fonctionnement du moteur en niveau 2, en 26, est également surveillé pour déclencher un fonctionnement de ce moteur en niveau 1 si le niveau thermique dans la ligne d'échappement passe au-dessus d'un seuil de température haute prédéterminée pendant une quatrième période de temps.

Ces différents tests sont désignés par la référence générale 29 sur cette figure, le fonctionnement du moteur en niveau 1 étant désigné par la référence générale 30.

Le superviseur maintient alors ce fonctionnement du moteur selon ce niveau 1 en 30, pendant une cinquième période de temps de forçage prédéterminé, en 31, ou jusqu'au moment où le niveau thermique dans la ligne d'échappement est redescendu, en 32, en dessous du seuil de température haute moins un écart d'hystérésis pendant une sixième période de temps. Si ce n'est pas le cas, le superviseur est adapté pour piloter un fonctionnement du moteur selon la première stratégie normale, en 33, dans le cas où le niveau thermique dans la ligne d'échappement n'est pas redescendu en dessous du seuil de température haute moins un écart d'hystérésis au bout d'une septième période de temps maximale de refroidissement, jusqu'à ce que le niveau thermique dans la ligne d'échappement soit redescendu sous ce seuil de température haute moins l'écart d'hystérésis pendant la sixième période de temps comme cela est illustré en 34.

Le superviseur reboucle ces stratégies jusqu'à la détection d'une requête d'arrêt de régénération en 36.

Ceci permet alors de maximiser les chances de réussite de la régénération notamment en conditions de roulages critiques, comme par exemple en ville ou dans des embouteillages.

Il va de soi que les températures d'objectif, haute et basse déterminée sont calibrables, de même que les périodes de temps mentionnées précédemment et les valeurs d'hystérésis.

A titre d'exemple, on peut passer des critères suivants pour une calibration classique d'aide à la régénération d'un filtre à particules de niveau 2:
- température maximale collecteur d'échappement =800°C
- exotherme catalyseur maximal = 150°C
- température sortie catalyseur maximale = 710°C
- température interne catalyseur maximale = 760°C
- teneur en oxygène minimale des gaz en sortie catalyseur = 3%
   aux critères suivants pour une stratégie de niveau 2 surcalibré :
- température maximale collecteur d'échappement =830°C
- exotherme catalyseur maximal = 200°C
- température sortie catalyseur maximale = 730°C
- température interne catalyseur maximale = pas de valeur maximale
- teneur en oxygène minimale des gaz en sortie catalyseur = 2%;

Avec les résultats suivants:

| | |
|---|---|
| **Cycles EUDC** | - température en entrée du FAP de 600°C atteinte en 200 sec. au lieu de 600 sec. avec l'aide à la RG standard |
| | - température en entrée du FAP de 650°C atteinte en 220 sec. alors que cette température n'est jamais atteinte en aide à la RG standard |
| **Cycle Ville** | - température en entrée du FAP de 500°C atteinte en 100 sec. au lieu de 150 sec. avec l'aide à la RG standard - température en entrée FAP de 550°C atteinte en 105 sec. au lieu de 300 sec. avec l'aide à la RG standard |
| | - température en entrée FAP de 600°C atteinte en 150 sec. alors que cette température n'est jamais atteinte en aide à la RG standard |

Il va de soi bien entendu que différents modes de réalisation de ce système peuvent être envisagés et que les moyens de dépollution peuvent comporter un filtre à particules, comme par exemple un filtre à particules catalysé ou encore un piège à NOx.

De plus, le carburant peut également comporter un additif destiné à se déposer avec les particules auxquelles il est mélangé, sur les moyens de dépollution pour faciliter leur régénération.

Ces moyens de dépollution peuvent également être imprégnés avec une formulation SCR assurant une fonction d'oxydation CO/HC de façon classique.

D'autres moyens formant catalyseur d'oxydation peuvent être envisagés et les moyens de dépollution et les moyens formant catalyseur d'oxydation peuvent être intégrés dans un seul et même élément, notamment sur le même substrat.

A titre d'exemple, un filtre à particules intégrant la fonction d'oxydation peut être envisagé.

De même, un piège à NOx intégrant une telle fonction d'oxydation peut également être envisagé, que celui-ci soit additivé ou non.

Cette fonction d'oxydation et/ou de piège à NOx peut être remplie, par exemple par un additif mélangé au carburant.

## Revendications

1. Système d'aide à la régénération de moyens de dépollution (1) associés à des moyens formant catalyseur d'oxydation (2) et intégrés dans une ligne d'échappement (3) d'un moteur Diesel (4) de véhicule automobile, dans lequel le moteur (4) est associé à des moyens (7.8) à rampe commune d'alimentation en carburant des cylindres du moteur, adaptés, par modification de paramètres de contrôle du fonctionnement du moteur (4) et en mettant en oeuvre des post-injections de carburant dans les cylindres de celui-ci, pour faire basculer le moteur entre quatre stratégies de régénération des moyens de dépollution (1), la première dite stratégie de fonctionnement normal (10) du moteur, la deuxième dite stratégie de niveau 1 (11), la troisième dite stratégie de niveau 2 (12) et la quatrième dite stratégie de niveau 2 surcalibré (13), permettant d'obtenir des niveaux thermiques différents dans la ligne d'échappement (3), le niveau thermique obtenu par application de la stratégie de niveau 2 surcalibré (13) étant supérieur à celui obtenu par application de la stratégie de niveau 2 (12), qui est lui-même supérieur à celui obtenu par application de la stratégie de niveau 1 (11), qui est lui-même supérieur à celui obtenu par application de la stratégie normale, les moyens d'alimentation (7) étant raccordés à des moyens (8) de détection d'une requête de régénération des moyens de dépollution (1) pour piloter les moyens d'alimentation (7) afin d'enclencher un fonctionnement du moteur selon la stratégie de niveau 1 (11) à la détection de cette requête et des moyens (8,17,18) de surveillance de l'état d'amorçage des moyens formant catalyseur (2) pour enclencher la stratégie de niveau 2 surcalibré (13), dès que lesdits moyens formant catalyseur d'oxydation (2) sont activés, à des moyens (8, 16) d'acquisition, du niveau thermique dans la ligne d'échappement (3) pour enclencher la stratégie de niveau 2 (12) du moteur lorsque ce niveau thermique dépasse une température d'objectif prédéterminée, pendant une première période de temps prédéterminée ou pour couper la régénération si cette température n'a pas été atteinte avant l'expiration d'une seconde période de temps maximale predeterminée, **caractérisé en ce que** les moyens d'alimentation (7) sont raccordés à des moyens de surveillance (8) du fonctionnement en niveau 2 (12) du moteur pour piloter un fonctionnement du moteur :
- en niveau 2 surcalibré (13) si le niveau thermique dans la ligne d'échappement (3) descend en dessous d'un seuil de température basse prédéterminée pendant une troisième période de temps, ou
<->, <formant catalyseur d'oxydation (2)>
- en niveau 1 (11) si le niveau thermique dans la ligne d'échappement (3) passe au-dessus d'un seuil de température haute prédéterminée pendant une quatrième période de temps,
- maintenir ce fonctionnement du moteur selon cette stratégie de niveau 1 pendant une cinquième période de temps de forçage prédéterminé (en 31) ou jusqu'au moment où le niveau thermique dans la ligne d'échappement est redescendu en-dessous du seuil de température haute moins un écart d'hystérésis pendant une sixième période de temps (en 32),
- piloter (en 33) un fonctionnement du moteur selon la stratégie normale (10) dans le cas où le niveau thermique dans la ligne d'échappement (3) n'est pas redescendu en-dessous du seuil de température haute moins l'écart d'hystérésis au bout d'une septième période de temps maximale de refroidissement jusqu'à ce que le niveau thermique dans la ligne d'échappement soit redescendu sous ce seuil de température haute moins l'écart d'hystérésis pendant la sixième période de temps (en 34),
- et ce, avec rebouclage des stratégies, jusqu'à la détection d'une requête d'arrêt (en 36) de la régénération par les moyens de détection.

2. Système selon la revendication 1, **caractérisé en ce que** les températures d'objectif, haute et basse sont calibrables.

3. Système selon la revendication 1 ou 2, **caractérisé en ce que** les périodes de temps sont calibrables.

4. Système selon la revendication 1, 2 ou 3, **caractérisé en ce que** les valeurs d'hystérésis sont calibrables.

5. Système selon l'une quelconque des revendications précédentes, **caractérisé en ce qu'**il comporte des moyens (15) d'émission de la requête de régénération et d'arrêt de celui-ci.

6. Système selon l'une quelconque des revendications précédentes, **caractérisé en ce que** les moyens de surveillance de l'état d'amorçage des moyens formant catalyseur (2) et d'acquisition de niveau thermique dans la ligne d'échappement (3), comprennent des capteurs de température (16 ,17,18).

7. Système selon l'une quelconque des revendications précédentes, **caractérisé en ce que** les moyens de dépollution (1) comprennent un filtre à particules.

8. Système selon la revendication 7, **caractérisé en ce que** le filtre à particules est catalysé.

9. Système selon l'une quelconque des revendications précédentes, **caractérisé en ce que** les moyens de dépollution (1) comprennent un piège à NOx.

10. Système selon l'une quelconque des revendications précédentes, **caractérisé en ce que** le carburant comporte un additif destiné à se déposer avec des particules auxquelles il est mélangé, sur les moyens de dépollution (1) pour faciliter leur régénération.

11. Système selon l'une quelconque des revendications précédentes, **caractérisé en ce que** le carburant comporte un additif formant piège à NOx.

12. Système selon l'une quelconque des revendications précédentes, **caractérisé en ce que** les moyens de dépollution (1) sont imprégnés avec une formulation SCR assurant une fonction d'oxydation CO/HC.

13. Système selon l'une quelconque des revendications précédentes, **caractérisé en ce que** le moteur (4) est associé à un turbocompresseur (5,6).

## Claims

1. System for aiding the regeneration of pollution control means (1) associated with oxidation catalyst forming means (2) and built into an exhaust line (3) of a diesel engine (4) of a motor vehicle, in which the engine (4) is associated with common rail injection means (7, 8) for feeding fuel to the cylinders thereof, adapted, by modifying the operating control parameters of the engine (4) and by carrying out fuel post-injections in the cylinders thereof, for switching the engine between four regeneration strategies of the pollution control means (1), the first called normal operating strategy (10) of the engine, the second called level 1 strategy (11), the third called level 2 strategy (12) and the fourth called supercalibrated level 2 strategy (13), for obtaining different temperature levels in the exhaust line (3), the temperature level obtained by application of the supercalibrated level 2 strategy (13) being higher than that obtained by application of the level 2 strategy (12), which is itself higher than that obtained by application of the level 1 strategy (11), which is itself higher than that obtained by application of the normal strategy, the feed means (7) being connected to means (8) for detecting a request for regeneration of the pollution control means (1) for controlling the feed means (7) in order to initiate an engine operation according to the level 1 strategy (11), upon the detection of the said request, and means (8, 17, 18) for monitoring the state of priming of the catalyst forming means (2) to initiate the supercalibrated level 2 strategy (13) as soon as the said oxidation catalyst forming means (2) are activated, and means (8, 16) for acquiring the temperature level in the exhaust line (3) for initiating the level 2 strategy (12) of the engine when this temperature level exceeds a predefined target temperature, during a first predefined time interval, or to interrupt the regeneration if this temperature has not been reached before the expiration of a second predefined maximum time interval, and **characterized in that** the feed means (7) are connected to means (8) for monitoring the level 2 operation (12) of the engine for switching to engine operation:
- in supercalibrated level 2 (13) if the temperature level in the exhaust line (3) falls below a predefined low temperature threshold during a third time interval, or
- in level 1 (11) if the temperature level in the exhaust line (3) rises above a predefined high temperature threshold during a fourth time interval,
- to maintain this engine operation according to this level 1 strategy during a fifth predefined forcing time interval (at 31) or up to the time when the temperature level in the exhaust line has fallen back below the high temperature threshold less a hysteresis gap during a sixth time interval (at 32),
- switching (at 33) to engine operation according to the normal strategy (10) in the case in which the temperature level in the exhaust line (3) has not fallen back below the high temperature threshold less the hysteresis gap after a seventh maximum cooling time interval until the temperature level in the exhaust line has fallen back below this high temperature threshold less the hysteresis gap during the sixth time interval (at 34),
- and the above, with repetition of the strategies, until the detection of a request (at 36) for stopping the regeneration received from the detection means.

2. System according to Claim 1, **characterized in that** the high and low target temperatures are calibrable.

3. System according to either of Claims 1 and 2, **characterized in that** the time intervals are calibrable.

4. System according to Claim 1, 2 or 3, **characterized in that** the hysteresis values are calibrable.

5. System according to any one of the preceding claims, **characterized in that** it comprises means (15) for issuing the requests for regeneration and for the interruption thereof.

6. System according to any one of the preceding claims, **characterized in that** the means for monitoring the state of priming of the catalyst forming means (2) and for acquiring the temperature level in the exhaust line (3), comprise temperature sensors (16, 17, 18).

7. System according to any one of the preceding claims, **characterized in that** the pollution control means (1) comprise a particulate filter.

8. System according to Claim 7, **characterized in that** the particulate filter is catalysed.

9. System according to any one of the preceding claims, **characterized in that** the pollution control means (1) comprise a NOx trap.

10. System according to any one of the preceding claims, **characterized in that** the fuel comprises an additive to be deposited with the particulates with which it is mixed, on the pollution control means (1) to facilitate their regeneration.

11. System according to any one of the preceding claims, **characterized in that** the fuel comprises a NOx trap forming additive.

12. System according to any one of the preceding claims, **characterized in that** the pollution control means (1) are impregnated with an SCR formulation, providing a CO/HC oxidation function.

13. System according to any one of the preceding claims, **characterized in that** the engine (4) is associated with a turbocharger (5, 6).

## Patentansprüche

1. Hilfssystem zum Regenerieren von Reinigungsmitteln (1), verbunden mit Mitteln, die einen Oxidationskatalysator (2) bilden und in eine Auspuffanlage (3) eines Dieselmotors (4) für Kraftfahrzeug integriert sind, wobei der Motor (4) mit Mitteln (7, 8) mit Common Rail-Kraftstoffversorgung der Zylinder des Motors verbunden ist, die durch Ändern der Steuerparameter des Betriebs des Motors (4) und durch Umsetzen der Nacheinspritzungen von Kraftstoff in dessen Zylinder angepasst sind, um den Motor zwischen vier Regenerierungsstrategien der Reinigungsmittel (1) umzuschalten, wobei die erste, normale Betriebsstrategie (10) des Motors genannt, die zweite, Strategie des Niveaus 1 (11) genannt, die dritte, Strategie des Niveaus 2 (12) genannt, und die vierte, Strategie des überkalibrierten Niveaus 2 (13) genannt, es erlauben, unterschiedliche Wärmeniveaus in der Auspuffanlage (3) zu erzielen, wobei das Wärmeniveau, durch Anwenden der Strategie des überkalibrierten Niveaus 2 (13) erzielt wird, höher ist als das, das durch Anwenden der Strategie des Niveaus 2 (12) erzielt wird, das selbst höher ist als das, das durch Anwenden der Strategie des Niveaus 1 (11) erzielt wird, das selbst höher ist als das, das durch Anwenden der normalen Strategie erzielt wird, wobei die Versorgungsmittel (7) an Mittel (8) zum Erfassen einer Regenerierungsanfrage der Reinigungsmittel (1) angeschlossen sind, um die Versorgungsmittel (7) zu steuern, um einen Betrieb des Motors gemäß der Strategie des Niveaus 1 (11) beim Erfassen dieser Anfrage auszulösen, und Mittel (8, 17, 18) zum Überwachen des Zündzustands der Mittel, die den Katalysator (2) bilden, um die Strategie des überkalibrierten Niveaus 2 (13) auszulösen, sobald die Mittel, die den Oxidationskatalysator (2) bilden, aktiviert sind, mit Mitteln (8, 16) zum Erfassen des Wärmeniveaus in der Auspuffanlage (3) zum Auslösen der Strategie des Niveaus 2 (12) des Motors, wenn dieses Wärmeniveau eine vorbestimmte Zieltemperatur während einer ersten vorbestimmten Zeitspanne überschreitet, oder um das Regenerieren abzuschalten, wenn diese Temperatur vor dem Ablaufen einer zweiten vorbestimmten maximalen Zeitspanne nicht erreicht wurde, und **dadurch gekennzeichnet, dass** die Versorgungsmittel (7) an Überwachungsmittel (8) des Betriebs im Niveau 2 (12) des Motors angeschlossen sind, um beim Betrieb des Motors wie folgt zu steuern:
- in überkalibriertem Niveau 2 (13), wenn das Wärmeniveau in der Auspuffanlage (3) während einer dritten Zeitspanne unter einen vorbestimmten niedrigen Temperaturschwellenwert sinkt, oder
- in Niveau 1 (11), wenn das Wärmeniveau in der Auspuffanlage (3) während einer vierten Zeitspanne über einen vorbestimmten oberen Temperaturschwellenwert geht,
- Aufrechterhalten dieses Betriebs des Motors gemäß dieser Strategie des Niveaus 1 während einer fünften vorbestimmten Forcierungszeitspanne (in 31) oder bis zu dem Zeitpunkt, in dem das Wärmeniveau in der Auspuffleitung wieder unter den oberen Temperaturschwellenwert abzüglich eines Hystereseunterschieds während einer sechsten Zeitspanne (in 32) gesunken ist,
- Steuern (in 33) eines Betriebs des Motors gemäß der normalen Strategie (10) in dem Fall, in dem das Wärmeniveau in der Auspuffanlage (3) am Ende einer siebten maximalen Kühlzeitspanne nicht wieder unter den oberen Temperaturschwellenwert abzüglich des Hystereseunterschieds gesunken ist, bis das Wärmeniveau in der Auspuffanlage wieder unter diesen oberen Temperaturschwellenwert abzüglich des Hystereseunterschieds während der sechsten Zeitspanne (in 34) gesunken ist,
- und das mit Rückverschleifen der Strategien bis zum Erfassen einer Stoppanfrage (in 36) für das Regenerieren durch die Erfassungsmittel.

2. System nach Anspruch 1, **dadurch gekennzeichnet, dass** die obere und die untere Zieltemperatur kalibrierbar sind.

3. System nach Anspruch 1 oder 2, **dadurch gekennzeichnet, dass** die Zeitspannen kalibrierbar sind.

4. System nach Anspruch 1, 2 oder 3, **dadurch gekennzeichnet, dass** die Hysteresewerte kalibrierbar sind.

5. System nach einem der vorhergehenden Ansprüche, **dadurch gekennzeichnet, dass** es Mittel (15) zum Senden der Regenerierungsanfrage und zum Stoppen des Regenerierens aufweist.

6. System nach einem der vorhergehenden Ansprüche, **dadurch gekennzeichnet, dass** die Mittel zum Überwachen des Zündzustands der Mittel, die den Katalysator (2) bilden, und zum Erfassen des Wärmeniveaus in der Auspuffanlage (3) Temperatursensoren (16, 17, 18) aufweisen.

7. System nach einem der vorhergehenden Ansprüche, **dadurch gekennzeichnet, dass** die Reinigungsmittel (1) ein Partikelfilter aufweisen.

8. System nach Anspruch 7, **dadurch gekennzeichnet, dass** das Partikelfilter katalysiert ist.

9. System nach einem der vorhergehenden Ansprüche, **dadurch gekennzeichnet, dass** die Reinigungsmittel (1) eine NOx-Falle aufweisen.

10. System nach einem der vorhergehenden Ansprüche, **dadurch gekennzeichnet, dass** der Kraftstoff einen Zusatz enthält, der dazu bestimmt ist, sich mit den Partikeln, mit welchen er gemischt wird, auf den Reinigungsmitteln (1) abzulagern, um ihr Regenerieren zu erleichtern.

11. System nach einem der vorhergehenden Ansprüche, **dadurch gekennzeichnet, dass** der Kraftstoff einen Zusatz enthält, der eine NOx-Falle bildet.

12. System nach einem der vorhergehenden Ansprüche, **dadurch gekennzeichnet, dass** die Reinigungsmittel (1) mit einer SCR-Formulierung imprägniert sind, die eine CO/HC-Oxidationsfunktion sicherstellt.

13. System nach einem der vorhergehenden Ansprüche, **dadurch gekennzeichnet, dass** der Motor (4) mit einem Turbokompressor (5, 6) verbunden ist.
